# DEMANDE DE BREVET EUROPEEN

(11) **EP 4 269 150 A1**
(43) Date de publication de la demande: **01.11.2023**
(21) Numéro de dépôt: 22170133.7
(22) Date de dépôt: 26.04.2022
(51) Int. Cl.: B60K 17/16, B60K 23/08, B60K 1/00, B60K 7/00

(54) **VÉHICULE ARTICULÉ À CHENILLES**

(71) Demandeur: Colomban, Loic, 05100 Villar-Saint-Pancrace (FR)
(72) Inventeur: Colomban, Loic, 05100 Villar-Saint-Pancrace (FR)
(74) Mandataire: Odoom, Ernest

(57) **Abrégé**

L'invention concerne un véhicule articulé comportant un module tracteur à chenilles et un module remorque à chenilles. Le véhicule comporte un système d'attelage permettant au module remorque d'être attelé au module tracteur avec trois degrés de liberté. Le module tracteur a deux moteurs, un par chenille et le module remorque a un seul moteur, relié aux deux chenilles du module remorque par un pont de transmission avec différentiel, la puissance du moteur du module remorque étant contrôlée par un système de contrôle prenant en compte la puissance d'au moins un des moteurs du module tracteur. Le système de contrôle peut aussi prendre en compte la pente du terrain et / ou un ajustement manuel fait par un conducteur du véhicule. Le véhicule peut comporter une benne à neige, montée sur le module tracteur, ainsi permettant le déplacement de grandes quantités de neige d'un endroit à un autre sur un terrain enneigé avec un grand contrôle, même sur du terrain à pente abrupte. Il peut être utilisé pour entretenir ou façonner des pistes de ski ou des parcs à neige.

## Description

### DOMAINE TECHNIQUE

La présente invention se rapporte à un véhicule chenillé articulé, qui peut être utilisé comme un transporteur tout-terrain. Selon un mode de réalisation avantageuse de l'invention, le véhicule peut être utilisé pour transporter de la neige pour modeler, aménager et / ou entretenir un terrain pour sports de glisse d'hiver, tel que le ski ou le snowboard. Plus généralement, l'invention peut être utilisée pour l'aménagement et / ou l'entretien de parcs à neige et / ou de pistes de ski lorsque qu'un tel aménagement ou entretien nécessite le déplacement d'importantes quantités de matériel ou de neige.

### ÉTAT DE LA TECHNIQUE

Des véhicules dameuses sont connus pour entretenir des pistes de sports de glisse d'hiver, ou sports de neige, tels que le ski ou le snowboard. Ces véhicules sont équipés de convoyeurs à chenilles (chenilles) et sont conçus spécialement pour se déplacer aisément sur des pentes très abruptes. Une dameuse peut être équipées d'une lame articulée avant, qui sert à donner forme à la piste, casser les bosses, ou boucher les trous. Les chenilles servent à mouvoir le véhicule et à faire un premier tassement et un brassage du manteau neigeux. A l'arrière de l'engin il peut y avoir une fraiseuse à neige ou un équipement fraisant pour chasser l'air du manteau neigeux, suivi juste après par de bavettes flexibles pour lisser le tout, préférablement avec une forme de tôle ondulée, ce qui permet d'augmenter la surface de neige en contact avec l'air froid, et, par conséquent, d'améliorer la pénétration du froid dans le manteau neigeux. Sur certains modèles de dameuses, par exemple dans le cas du véhicule dameuse qui est divulgué dans la demande international de brevet, numéro de publication WO 2021/137375 A1, la lame articulée avant peut servir à déplacer une certaine quantité de neige d'un endroit à un autre. Cependant, il est parfois nécessaire de déplacer de plus importantes quantités de neige sur des distances plus longues selon le type d'entretien que nécessite certaines pistes ou certains parcs à neige.

Le brevet français, numéro de publication FR 3 049 968 B3, divulgue un véhicule de damage comprenant une cabine de conduite montée sur un châssis de support équipé de convoyeurs à chenille. Le véhicule comporte une structure porteuse dans la forme d'une deuxième cabine pour recevoir plusieurs passagers. La structure pour passagers est montée sur le même châssis que la cabine de conduite, ce qui peut convenir pour une charge sensiblement moins lourde qu'une cargaison de neige pour modeler une rampe dans un parc à neige par exemple.

Des engins chargeuses sont connus, qui sont capable, grâce à un godet de chargement ou une pelle, de déplacer du matériel d'un endroit à un autre. Cependant, ils ne sont pas adaptés pour évoluer sur un terrain enneigé. De tels engins, quand ils sont équipés de convoyeurs à chenilles, peuvent être utilisés sur un terrain enneigé pour déplacer de la neige d'un endroit à un autre. Ce genre d'engin, néanmoins ne convient pas toujours selon le type de terrain, par exemple sur un terrain fortement pentu, tel un parc à neige pour des compétitions de snowboard ou une piste de ski avec une pente importante. Pour déplacer d'importantes quantités de neige avec un tel engin il faudrait faire de nombreux aller-retours. De surcroit, pour pouvoir aménager le terrain il faudrait un engin spécialisé supplémentaire.

Le brevet européen, numéro de publication EP 1 405 782 B1 divulgue une machine de préparation de terrain comprenant un véhicule de base et un outil de façonnage remorqué par le véhicule de base. L'outil de façonnage représente typiquement un poids considérable, qui peut avoir un effet négatif sur le contrôle de l'ensemble véhicule de base / outil de façonnage lors de son déplacement. Le document divulgue un attelage de remorquage qui comprend des moyens de manoeuvre spécialement adaptés pour assurer un guidage correct de l'outil de façonnage. Le document ne divulgue pas de solution pour résoudre le problème de manque de traction de l'ensemble lors de son déplacement sur un terrain enneigé et / ou fortement pentu dû au poids de l'outil de façonnage.

On connaît des engins tracteurs à chenilles, qui sont adaptés pour tirer une remorque, la remorque étant sur des roues ou sur des skis. Toutefois, de telles remorques ne sont généralement pas motorisées et la manœuvrabilité de ces véhicules devient difficile lorsque le terrain est fortement pentu ou glissant et / ou lorsque la remorque est fortement chargée.

Un véhicule de transport tout-terrain articulé est connu comportant deux wagons à chenilles. Les deux wagons sont raccordés l'un à l'autre à l'aide d'une direction articulé centrale comportant des cylindres hydrauliques qui permettent quatre axes d'oscillations pour diriger le véhicule en laissant pivoter librement les wagons l'un par rapport à l'autre. Le brevet européen numéro de publication EP2490916B1 divulgue un tel véhicule articulé à chenilles comportant un module avant et un module arrière. Les chenilles du module avant et celles du module arrière peuvent être entraînées à des vitesses différentes pour optimiser la puissance d'entraînement et la traction du véhicule. Le véhicule comporte un arbre d'entraînement avant qui fait tourner une chenille avant du module avant et un arbre d'entraînement arrière qui fait tourner une chenille arrière le module arrière. Le véhicule comporte au moins un moteur qui fait tourner l'arbre d'entraînement respectivement avant et arrière pour ainsi propulser le véhicule à une vitesse donnée. L'arbre d'entraînement avant peux tourner à une première vitesse et l'arbre d'entraînement arrière peut tourner à une deuxième vitesse. La première vitesse et la deuxième vitesse peuvent être différentes si bien que les chenilles avant et arrière tournent à des vitesses différentes.

Dans un premier mode de réalisation du véhicule décrit dans le brevet EP2490916B1, le véhicule comporte une transmission mécanique. Le module avant comporte un moteur à combustion interne, qui est couplé, par une boîte de transfert à un arbre d'entraînement avant et un arbre d'entraînement arrière. La boîte de transfert est actionnée par un dispositif de régulation qui régule la boîte de transfert de telle sorte que l'arbre d'entraînement avant, par l'intermédiaire d'un premier arbre articulé, tourne à une première vitesse et que l'arbre d'entraînement arrière, par l'intermédiaire d'un deuxième arbre articulé, tourne à une deuxième vitesse. Ainsi, la première et la deuxième vitesse peuvent être différentes, de sorte que les chenilles avant et arrière tournent à des vitesses différentes.

Dans un deuxième mode de réalisation décrit dans le même document, le véhicule comporte une transmission hydrostatique. Dans ce cas, les deux chenilles du module avant ont chacun leur propre moteur hydraulique pour entraîner sa chenille correspondante. Similairement, les deux chenilles du module arrière ont chacun leur propre moteur hydraulique. Selon un troisième mode de réalisation, les deux chenilles du module avant et les deux chenilles du module arrière ont chacune un moteur électrique correspondant.

Pour raccorder un véhicule tracteur à un véhicule remorque, un système d'attelage est connu comportant une sellette d'attelage sur le véhicule tracteur et un pivot d'attelage sur le véhicule remorque, le pivot configuré pour coopérer avec la sellette pour connecter les véhicules de façon à permettre au véhicule remorque de pivoter autour d'un axe sensiblement vertical, perpendiculaire à la direction prise par le véhicule. Il existe des systèmes d'attelage dits à double oscillation, qui permettent au véhicule tracteur de pivoter autour d'un axe longitudinal, dans le sens du mouvement du véhicule. En revanche de tels systèmes n'existe que pour des gros tonnages, pesant dans les 300kg et prenant beaucoup de place alors que sur des véhicules de taille plus modeste il n'y a pas suffisamment de place pour installer une sellette d'attelage double oscillante standard. Les sellettes d'attelage double oscillantes connues sont configurées obligatoirement de pouvoir bloquer le pivotement autour de l'axe longitudinal en prévision du cas où le véhicule roule sur la route publique.

### RÉSUMÉ DE L'INVENTION

Vu l'état de la technique, il manque un système d'aménagement de terrains à neige capable de modeler par exemple un parc à neige tout en déplaçant d'importantes quantités de neige avec un grand contrôle, et une grande manœuvrabilité, même sur des pentes abruptes et enneigés.

Selon un premier aspect, un véhicule transporteur tout-terrain est proposé. Plus particulièrement, il est divulgué un véhicule articulé comportant un module tracteur à chenilles, un module remorque à chenilles et un système d'attelage permettant au module remorque d'être attelé au module tracteur. Le véhicule articulé comporte aussi un premier moteur pour mettre en mouvement une première chenille du module tracteur, un deuxième moteur pour mettre en mouvement une deuxième chenille du module tracteur, un troisième moteur pour mettre en mouvement au moins une chenille du module remorque et un système de contrôle ayant une interface de contrôle permettant à un conducteur du véhicule articulé de gérer une vitesse et une direction de marche du véhicule articulé en contrôlant au moins une vitesse d'entraînement de la première chenille du module tracteur par rapport à une vitesse d'entraînement de la deuxième chenille du module tracteur ainsi que par rapport à une vitesse d'entraînement de la chenille du module remorque.

Avantageusement, le module remorque comporte un pont de transmission agencé pour permettre au troisième moteur de mettre en mouvement les deux chenilles du module remorque à des vitesse différentes en adéquation avec la vitesse et la direction de marche.

Selon un mode préférentiel de réalisation, le premier et le deuxième moteur, ainsi que le système de contrôle, sont montés sur le module tracteur et le troisième moteur est monté sur le module remorque, le troisième moteur étant configuré pour entraîner un arbre de transmission qui est lié aux deux chenilles du module remorque par le pont de transmission, le pont de transmission comportant un différentiel pour permettre aux deux chenilles du module remorque d'être entraînées à des vitesses indépendantes l'une de l'autre.

De préférence, le module remorque a une configuration de semi-remorque dans le sens où les chenilles du module remorque sont situées vers l'arrière du module remorque. De cette façon, le module remorque n'a pas d'essieu de roulement à sa partie avant, laquelle repose et s'articule sur l'arrière du module tracteur. Ceci permet d'avoir une bonne distribution de la charge du module remorque entre le module tracteur et le module remorque, par exemple la moitié sur le module tracteur et la moitié sur le module remorque ou un quart sur le module tracteur et trois quarts sur le module remorque.

Le système d'attelage comporte une sellette d'attelage fixée sur l'arrière du module tracteur et un pivot d'attelage fixé sur l'avant du module remorque. La sellette d'attelage et le pivot d'attelage sont configurés pour coopérer pour permettre au module remorque de s'articuler autour d'un point pivot vers l'arrière du module tracteur. Le module remorque peut ainsi pivoter autour d'un premier axe, soit un axe vertical, sensiblement perpendiculaire à la direction de marche du module tracteur, autour d'un deuxième axe, soit un axe horizontal, sensiblement perpendiculaire à la direction de marche, et dans un troisième axe, soit un axe longitudinal, sensiblement parallèle à la direction de marche.

Selon un mode de réalisation, le véhicule comporte un système de transmission hydrostatique, le module tracteur comportant un moteur principal de puissance, qui peut être un moteur électrique ou un moteur thermique, par exemple un moteur à combustion interne. Dans ce mode de réalisation, le premier moteur, le deuxième moteur et le troisième moteur sont des moteurs hydrauliques avec leurs pompes hydrauliques respectives et leurs servomoteurs respectifs. Les pompes et les servomoteurs font partie du système de contrôle, qui est complété par une boîte de contrôle électronique. Selon un autre mode de réalisation le véhicule comporte un système de transmission électrique. Dans ce mode de réalisation, le moteur principal peut être un moteur électrique ou un moteur thermique et les autres moteurs pour entraîner les chenilles sont des moteurs électriques. Le système de contrôle, dans ce mode de réalisation, est électronique et se trouve préférablement dans une boîte électronique de contrôle, de préférence sur le module tracteur.

Selon un deuxième aspect, un véhicule tracteur à chenilles est proposé, le véhicule comprenant un premier moteur pour mettre en mouvement une première chenille du véhicule tracteur, un deuxième moteur pour mettre en mouvement une deuxième chenille du véhicule tracteur, un système de contrôle ayant une interface de contrôle permettant à un conducteur du véhicule tracteur de gérer une vitesse et une direction de marche du véhicule en contrôlant au moins une vitesse d'entraînement de la première chenille du véhicule tracteur par rapport à une vitesse d'entraînement de la deuxième chenille du véhicule tracteur, et un système d'attelage permettant d'atteler un véhicule remorque. Avantageusement, le système de contrôle est configuré, de surcroit, pour fournir un signal pour contrôler une vitesse d'entraînement des chenilles du véhicule remorque par rapport à la vitesse d'entraînement d'au moins la première chenille du véhicule tracteur.

Selon un troisième aspect, un véhicule remorque à chenilles est proposé, comprenant une paire de chenilles. Avantageusement, le véhicule remorque comporte un moteur adapté pour être commandé par un signal externe au véhicule remorque, ledit moteur étant configuré pour entraîner en rotation un arbre de transmission, et un pont de transmission comportant un différentiel, le pont de transmission placé entre l'arbre de transmission et d'un côté un premier barbotin agencé pour entraîner une première chenille de la paire de chenilles et de l'autre côté un deuxième barbotin agencé pour entraîner une deuxième chenille de la paire de chenilles indépendamment de la première chenille de la paire de chenilles. De plus, le véhicule remorque est adapté pour être attelé à un autre engin par un système d'attelage qui permet au module remorque de pivoter autour d'un point pivot sur l'autre engin : dans un premier axe vertical sensiblement perpendiculaire à une direction de marche du véhicule remorque ; dans un deuxième axe horizontal sensiblement perpendiculaire à la direction de marche ; et dans un troisième axe longitudinal sensiblement parallèle à la direction de marche.

Selon un mode préféré de réalisation, le module tracteur est une dameuse à treuil modifiée. Elle est modifiée pour pouvoir être attelé à une deuxième dameuse comme module remorque, sur laquelle le moteur de marche est raccordé par un ou plusieurs flexibles hydrauliques au moteur de treuil de la dameuse à treuil. Le servomoteur de treuil est remplacé par un servomoteur de marche. La deuxième dameuse est modifiée en ajoutant un pont et une transmission différentielle pour entraîner les barbotins des chenilles. Une benne à neige peut être montée sur le châssis de la deuxième dameuse, qui a été préalablement vidé à part son moteur de marche et ses chenilles. Un système de control est ajouté à la dameuse à treuil pour contrôler les servomoteurs des pompes qui alimentent les deux moteurs de marche selon les instructions de marche fournies par l'opérateur du véhicule articulé. Le système de contrôle comporte aussi un potentiomètre, accessible par l'opérateur, dans la dameuse à treuil, pour ajuster le rapport de puissances envoyer vers le moteur de la dameuse à treuil et la deuxième dameuse.

Ainsi, il est possible de déplacer de grandes quantités de neige en préparant une piste de neige ou parc à neige et tout en gardant un grand contrôle sur le véhicule articulé même sur du terrain enneigé et à forte pente.

### DESCRIPTION SOMMAIRE DES DESSINS

Les caractéristiques de l'invention apparaitront plus clairement à la lecture de la description de plusieurs formes d'exécution données uniquement à titre d'exemple, nullement limitative, en se référant aux figures schématiques, dans lesquelles :
- La figure 1 représente le véhicule articulé selon un mode de réalisation de l'invention ;
- La figure 2 montre schématiquement un mode de réalisation de l'invention ; et
- La figure 3 montre schématiquement une boîte électronique de contrôle faisant partie d'un système de contrôle qui peut être déployé dans un mode de réalisation du véhicule articulé de l'invention.

### DESCRIPTION DÉTAILLÉE DE L'INVENTION

Une dameuse est un véhicule sur chenilles spécialement conçu pour améliorer la qualité de la neige pour la pratique des principaux sports de neige. Elle est utilisée dans les domaines skiables pour préparer les pistes de ski ou les parcs à neige. Les dameuses peuvent évoluer sur des terrains enneigés, même sur des pentes très abruptes. En générale, la transmission des dameuses est de type hydrostatique. Un moteur, par exemple un moteur électrique ou un moteur thermique, entraîne en rotation une ou plusieurs pompes hydrauliques, par exemple, à cylindrée variable, qui elles-mêmes alimentent un ou plusieurs moteurs hydrauliques, par exemple des moteurs d'avancement pour faire avancer la dameuse sur ses chenilles, ou des moteurs de l'équipement avant ou arrière, comme une fraiseuse à neige, une lame de débroussaillage, une serpillère, un godet, etc. Selon d'autres modes de réalisation, les moteurs d'avancement et / ou les moteurs d'équipements peuvent être des moteurs électriques.

Dans la cabine de la dameuse, l'opérateur utilise une interface de contrôle pour donner des commandes à la dameuse pour la faire avancer, pour donner une direction de mouvement et pour manipuler l'équipement avant et / ou arrière. L'interface de contrôle peut comporter un ou plusieurs volants, un ou plusieurs manettes, un ou plusieurs boutons rotatifs etc. pour permettre à l'opérateur de commander les pompes et / ou les moteurs qui font avancer la dameuse et qui font travailler les outils ou équipements. La direction d'avancement de la dameuse peut être contrôlée en variant la vitesse des deux chenilles du module tracteur l'une par rapport à l'autre. Un ou plusieurs servomoteurs peuvent être utilisés pour contrôler la vitesse des moteurs hydrauliques dans le cas d'une transmission hydrostatique.

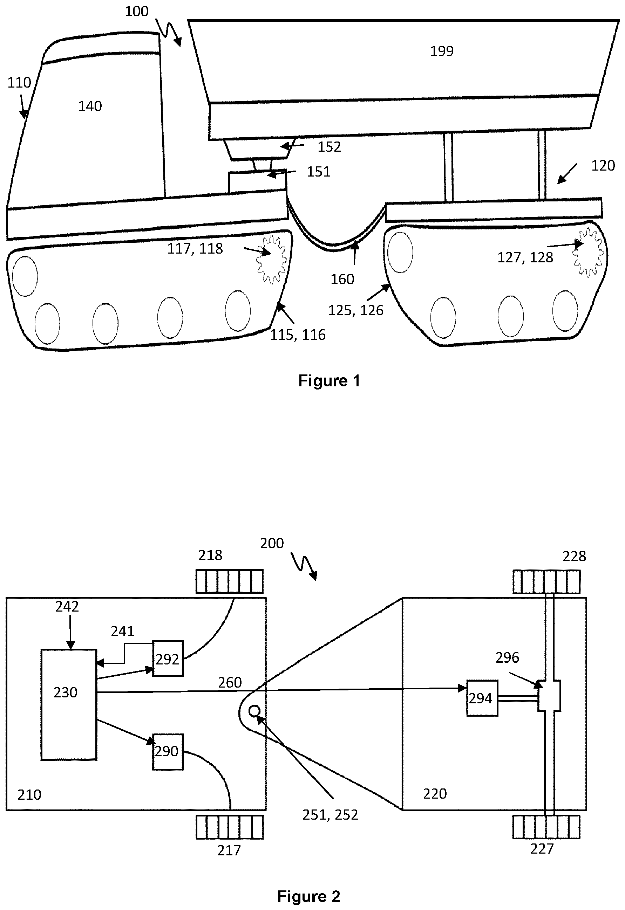

La figure 1 montre un véhicule articulé 100 selon un mode de réalisation de l'invention. Le véhicule peut être employé pour faire de l'aménagement et / ou de l'entretien de pistes ou de terrains pour des sports de glisse d'hiver, tels que le ski ou le snowboard. Le véhicule 100 peut être utilisé pour préparer une piste de ski ou pour modeler ou autrement entretenir un parc à neige pour la pratique du snowboard. Le véhicule 100 comporte un module tracteur 110 et un module remorque 120. Selon un mode de réalisation, le module tracteur est une dameuse sur laquelle certaines modifications ont été faites pour la rendre compatible avec sa fonction de module tracteur dans véhicule 100 de l'invention, notamment le fait qu'elle va être attelée à un autre véhicule ou module. Selon un mode préféré de réalisation de l'invention, la dameuse garde au moins une partie de ses fonctions d'aménagement et / ou entretien de pistes ou de parcs à neige, par exemple sa lame à neige. Ainsi le véhicule articulé peut être utilisé pour modeler un terrain enneigé. Selon le mode de réalisation, le module remorque comporte un châssis sur convoyeurs à chenilles. Il comporte un moteur pour entraîner ses deux chenilles, et sur le châssis est montée une benne à neige.

Le module tracteur 100 comporte une sellette d'attelage 151, et le module remorque comporte un pivot d'attelage adapté pour coopérer avec la sellette d'attelage pour permettre au module tracteur 110 et au module remorque 120 d'être reliés ensemble pour que le véhicule articulé puisse se déplacer avec une grande manœuvrabilité. Selon un mode préféré de réalisation, la sellette d'attelage est montée pivotante autour d'un axe longitudinal dans le sens de déplacement du véhicule. La sellette, comme les sellettes déjà connues, permet aux pivotements du pivot d'attelage autour d'un axe vertical, perpendiculaire au sens de déplacement su véhicule et elle permet un pivotement de quelques degrés autour d'un axe horizontal, perpendiculaire au sens de déplacement du véhicule. Ce système d'attelage peut être appelé une sellette double oscillante. La sellette double oscillante de l'invention a dû être construite spécialement du fait que les sellettes double oscillantes existantes sont surdimensionnées par rapport à la place disponible sur le véhicule articulé de l'invention.

Selon un mode préféré de réalisation de l'invention, les chenilles du module remorque se trouvent vers la partie arrière du module remorque. Quand le module remorque n'est pas attelé au module tracteur, la partie avant du module remorque peut se poser sur une béquille, ou sur des béquilles. Ainsi, le module remorque a une configuration dite « semi-remorque ». Le module remorque n'ayant pas d'essieu de roulement à sa partie avant, cette partie repose et s'articule sur l'arrière du module tracteur du véhicule articulé. Ceci permet d'avoir une bonne distribution de la charge du module remorque entre le module tracteur et le module remorque, par exemple la moitié sur le module tracteur et la moitié sur le module remorque ou un quart sur le module tracteur et trois quarts sur le module remorque.

Les chenilles du module tracteur et les chenilles du module remorque sont motorisées. Selon un mode de réalisation de l'invention, le véhicule comporte un système de contrôle pour gérer le couple fourni par les moteurs qui entraînent les barbotins qui, chacun, s'engage avec sa chenille correspondante pour faire déplacer le module tracteur sur ses chenilles, par rapport au couple fourni par le moteur qui entraîne les barbotins qui, chacun, s'engage avec sa chenille correspondante pour faire déplacer le module remorque sur ses chenilles. En d'autres termes, le système de contrôle permet de varier la puissance entre les moteurs du module tracteur par rapport à la puissance du moteur du module remorque, ce qui revient à varier la vitesse d'entraînement des chenilles du module tracteur par rapport à la vitesse d'entraînement des chenilles du module remorque. Le système de contrôle peut mesurer un paramètre qui dépend de la vitesse d'au moins une des chenilles du module tracteur et calculer combien de puissance à envoyer au moteur du module remorque pour optimiser l'adhérence du véhicule, par exemple, en fonction du type de terrain sur lequel le véhicule se déplace ou en fonction de la déclivité du terrain. Dans un mode de réalisation, le conducteur du véhicule peut intervenir manuellement dans le système de contrôle en utilisant une commande sur l'interface de contrôle. Ceci permet d'avoir un grand contrôle de conduite du véhicule sur des terrains enneigés et / ou fortement pentu, même en transportant de grosses charges. Par exemple, en descente, le module remorque pourra contribuer au freinage du véhicule en ralentissant ses chenilles ou en montée le moteur du module remorque peut fournir plus de puissance pour aider le mouvement tout en gardant un bon contrôle du véhicule.

Selon un mode de réalisation, le module tracteur du véhicule articulé comporte deux moteurs, soit un moteur par chenille. Chacun des deux moteurs du module tracteur est configuré pour entraîner en rotation un barbotin correspondant, sous le contrôle du système de contrôle qui règle la vitesse de rotation du barbotin respectif en fonction des commandes données par le conducteur du véhicule par l'intermédiaire d'une interface de contrôle. Chaque barbotin s'engraine avec une des deux chenilles du module tracteur pour faire rouler le module tracteur sur les chenilles et faire avancer ou reculer le module tracteur. Ainsi, une vitesse et une direction de marche peut être donnée au tracteur. Avantageusement, le module remorque comporte un moteur, qui est relié à deux barbotins qui font marcher chacun une des deux chenilles du module remorque. Cette liaison est faite par un arbre de transmission et un pont de transmission avec un différentiel pour permettre aux deux barbotins de tourner à des vitesses différentes, si nécessaire, selon un trajet donné par le module tracteur. La puissance du moteur du module remorque, et ainsi le couple, ou la vitesse de rotation, est gérée par le système de contrôle selon la vitesse, couple, ou puissance d'au moins un des moteurs du module tracteur. Le système de contrôle peut aussi prendre en compte des instructions données par le conducteur pour influencer le rapport des puissances des moteurs du module tracteur et le moteur du module remorque. Le système de contrôle peut recevoir un ou plusieurs signaux d'un ou plusieurs capteurs sur le véhicule pour indiquer une déclivité du terrain ou pour indiquer si un ou plusieurs des chenilles subissent une perte de prise sur le terrain. De cette façon, le module le véhicule est hautement contrôlable sur du terrain enneigé ou boueux, même sur des pentes raides, le module remorque pouvant contribuer à la poussée dans une montée ou au freinage dans une descente par le système de contrôle. Dans un mode de réalisation, le système de contrôle peut aussi agir sur les freins du module tracteur et sur les freins du module remorque.

Le module remorque 120 comporte aussi un châssis monté sur une paire de chenilles 125, 126, pour permettre au module remorque 120 de se déplacer en avant et en arrière, et il comporte un pivot d'attelage 152, compatible avec la sellette d'attelage 151 du module tracteur, pour permettre au module remorque 120 d'être remorqué, avec une grande manœuvrabilité, par le module tracteur 110. Dans le cas où le véhicule comporte un système de transmission hydrostatique, le module remorque 120 peut aussi être relié au module tracteur 110 par un ou plusieurs flexibles hydrauliques 160 pour assurer un système hydraulique intégré, distribué entre le module tracteur 110 et le module remorque 120.

Selon un mode de réalisation de l'invention, le système d'attelage, qui inclut la sellette d'attelage 151 du module tracteur et le pivot d'attelage 152 du module remorque, est configuré pour pivoter autour d'un premier axe, longitudinal, parallèle à la direction de marche du véhicule articulé. Selon un mode de réalisation, le système d'attelage peut aussi pivoter dans un sens vertical, autour d'un deuxième axe, perpendiculaire à l'axe longitudinal. Selon un mode de réalisation, le système d'attelage peut aussi pivoter dans un sens horizontal, autour d'un troisième axe perpendiculaire à l'axe longitudinal. Dans un mode de réalisation préféré, la sellette d'attelage est montée sur le châssis du module tracteur, pivotante autour d'un axe longitudinal, et le pivot d'attelage est monté sur le module remorque pour coopérer avec la sellette d'attelage. La sellette et le pivot coopèrent de façon à permettre un pivotement autour d'un axe vertical ainsi que quelques degrés de pivotement autour d'un axe horizontal. Dans ce mode de réalisation la sellette est montée pivotante sur le châssis autour d'un axe longitudinal dans le sens de la longueur du châssis, dans le sens du déplacement du véhicule. Ceci permet d'avoir une grande manœuvrabilité sur tous types de terrain avec une grande flexibilité entre les deux modules du véhicule articulé. Une sellette montée de cette façon fonctionne comme une sellette double oscillante ou une sellette à double oscillation. Dans un autre mode de réalisation, la sellette à double oscillation est montée sur le module remorque et le pivot d'attelage qui coopère avec la sellette d'attelage est monté sur le module tracteur. Dans un mode de réalisation il est possible de bloquer les oscillations autour de l'axe longitudinal pour un meilleur contrôle du véhicule articulé sur la route à des vitesses élevées.

Dans un mode de réalisation, le véhicule comporte un système de transmission hydrostatique comprenant deux moteurs hydraulique montés sur le module tracteur et un moteur hydraulique monté sur le module remorque et le système de contrôle comporte l'interface de contrôle, une boîte électronique de contrôle, une pompe hydraulique par moteur et un servomoteur hydraulique par pompe pour contrôler la vitesse des moteurs. Le système de contrôle comprend en outre un bouton de contrôle manuel pour permettre au conducteur de fixer manuellement ou d'ajuster manuellement le rapport de puissance entre les moteurs. Le système de contrôle peut comporter des capteurs pour détecter la vitesse d'un ou plusieurs moteurs, barbotins ou chenilles ou pour capter un angle formé entre le module tracteur et le module remorque à un point sur la sellette d'attelage, par exemple ou pour capter une orientation ou une attitude du véhicule pour donner des informations sur la déclivité du terrain.

Dans un autre mode de réalisation, le véhicule comporte un système de transmission électrique comprenant deux moteurs électriques montés sur le module tracteur et un moteur électrique monté sur le module remorque. Dans ce cas, le système de contrôle comporte l'interface de contrôle et une boîte électronique de contrôle agencée pour contrôler électriquement les moteurs en fonction d'une commande donné par le conducteur ou par les capteurs mentionnés dessus.

La figure 2 montre, schématiquement, un exemple d'un véhicule articulé 200 selon un mode de réalisation dans lequel le véhicule comporte des moteurs électroniques. Le module tracteur 210 comporte un barbotin gauche 217 pour coopérer avec une chenille gauche pour la faire tourner et un barbotin droit 218 pour coopérer avec une chenille droite pour la faire tourner. Les chenilles ne sont pas montrées dans la figure 2. Le module tracteur comporte deux moteurs électriques de marche 290, 292 agencés pour entraîner en rotation un barbotin correspondant. Le module tracteur comporte un système de contrôle comprenant une boîte de contrôle avec une interface de contrôle 230 comprenant au moins une commande manuelle 242 accessible par un conducteur de véhicule. La commande manuelle peut être simplement une direction et une vitesse du module tracteur ou elle peut comprendre une instruction pour modifier un rapport de puissance des moteurs du module tracteur par rapport à la puissance du moteur du module remorque. La boîte de contrôle peut recevoir une information d'au moins un des moteurs de marche du module tracteur, par exemple la vitesse, pour ensuite calculer la vitesse requise pour le deuxième moteur de marche du module tracteur et la vitesse requise pour le moteur de marche du module remorque. Ces calculs peuvent être basés sur la commande manuelle ou une information d'un ou plusieurs capteurs du véhicule, comme mentionné ci-dessus. Une commande 260 est ainsi donné au moteur électrique du module remorque, qui entraîne les barbotins du module remorque par intermédiaire de l'arbre de transmission et le pont de transmission avec différentiel ainsi s'assurant que le module remorque pousse ou tire droite et est guidé dans la bonne direction donnée par le trajet du module tracteur.

La figure 2 montre un mode de réalisation de l'invention dans lequel le véhicule comporte un système de transmission électrique, avec des moteurs de marche électrique, mais comme mentionné ci-dessus, mais il est également possible de pratiquer l'invention dans un mode de réalisation dans lequel le véhicule comporte un système de transmission hydrostatique. Les moteurs du module tracteur peuvent se trouver dans l'axe du barbotin correspondant selon un mode de réalisation.

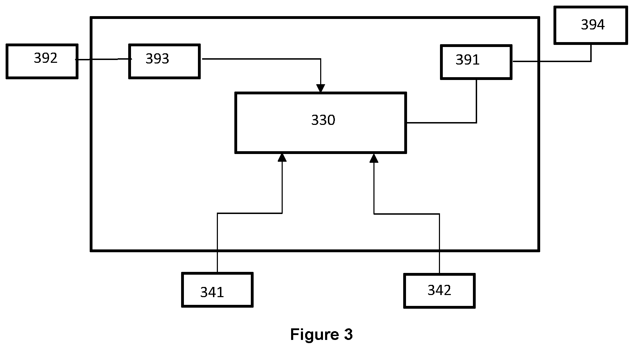

La figure 3 illustre un exemple d'une boîte électronique de contrôle qui peut être déployé dans un module tracteur du véhicule selon un mode de réalisation de la présente invention. Un contrôleur, par exemple un microcontrôleur est agencé pour mesure le couple ou la vitesse ou la puissance d'un des moteurs du module tracteur ou pour mesurer une vitesse de rotation d'un barbotin ou d'une des chenilles. Le microcontrôleur peut être configuré pour calculer un couple ou une vitesse ou une puissance requise du moteur du module remorque selon des informations reçues d'un ou plusieurs capteurs et / ou selon une commande manuelle donné par le conducteur pour influencer le rapport des vitesses des chenilles du module tracteur et du module remorque. Par exemple, le microcontrôleur 330 pourrait recevoir une mesure du courant 341 mesuré 393 dans l'un des moteurs 392 du module tracteur 310. Le microcontrôleur peut calculer combien de courant il faudrait fournir 391 au moteur 394 du module remorque. Le calcul peut dépendre d'une intervention manuelle 342 et / ou d'un ou plusieurs paramètres 341 mesurés par un ou plusieurs capteurs sur le véhicule. Par exemple un capteur pourrait détecter un angle entre les deux modules sur la sellette ou un capteur pourrait détecter la pente sur laquelle au moins un des modules évolue ou des capteurs de vitesse d'entraînement des chenilles ou de barbotins peuvent être agencés pour détecter si le module tracteur ou le module remorque est en train de subir une perte de traction. Le microcontrôleur peut aussi être adapté pour prendre en compte les rapports de différents d'engrenages et vitesses dû à l'utilisation du point de transmission avec différentiel. Cette compensation peut aussi être influencée par le contrôle manuel.

Dans un mode de réalisation de la boîte électronique de contrôle, la boîte est configurée pour mesurer un courant dans une électrovanne proportionnelle qui commande un des moteurs du module tracteur. Ce courant peut être mesuré sans le perturber. Il peut être amplifié pour faire un signal qui est ensuite utilisé pour contrôler une électrovanne proportionnelle auxiliaire qui commande le moteur du module remorque. Le microcontrôleur est programmé pour faire une correction de la valeur de ce signal, prenant en compte une variation dû à une ou plusieurs signaux reçus d'un ou plusieurs capteurs ou qui est dérivé d'une commande manuelle. Cette correction permet d'affiner la poussé du module remorque en fonction de la charge et / ou de la nature du terrain. Un des capteurs peut être un capteur pour mesurer l'attitude pour automatiser la différence de poussée par le module tracteur par rapport au module remorque en fonction de la déclivité du terrain et / ou de l'angle formé entre le module remorque et le module tracteur. La valeur de cette correction dépend de la configuration du système. Ce procédé peut être utilisé également pour pousser ou freiner le module remorque dans le cas d'une pente raide et / ou pour aider au franchissement des zones à faible adhérence.

Pour contrôler la marche et la direction de marche il y a une interface de contrôle, accessible par un opérateur dans une cabine du module tracteur 140. L'interface de contrôle, selon un mode de réalisation, comporte un volant ou une ou plusieurs manettes. La direction du véhicule s'opère par variation de vitesse des chenilles l'une par rapport à l'autre. L'interface de contrôle est reliée à un système de contrôle qui inclut un servomoteur pour contrôler la pompe hydraulique qui alimente les deux moteurs. Ainsi chaque moteur peut être entraîner à des vitesses indépendamment l'un de l'autre selon les instructions données par l'opérateur.

Le module remorque a son propre moteur de marche, un moteur pour les deux chenilles. Il comporte un pont arrière avec une transmission différentielle pour permettre à chacun des barbotins d'être entrainés à des vitesses différentes pour faciliter la manœuvrabilité du module remorque. La pompe hydraulique pour le moteur de marche sur le module remorque est sur le module tracteur et est relié au moteur du module remorque par un ou plusieurs flexibles hydrauliques. La pompe hydraulique pour le moteur du module remorque est contrôlée par un servomoteur sur le module tracteur.

Selon un mode de réalisation, le véhicule articulé peut être réalisé en modifiant une première dameuse, préférablement une dameuse à treuil, pour servir de module tracteur 110 du véhicule articulé 100, et en modifiant une deuxième dameuse pour servir comme module remorque 120 du véhicule articulé 100. Sur la deuxième dameuse on garde les chenilles et le moteur de marche. Sur le châssis de la deuxième dameuse on monte une benne pour transporter du matériel. Dans un mode de réalisation préféré, la benne est une benne à neige pour transporter d'importantes quantités de neige. Dans un mode de réalisation la benne à neige est une benne basculante, contrôlable à partir du premier véhicule grâce à un ou plusieurs flexibles hydrauliques pour relayer les pompes et moteurs nécessaires pour opérer la benne basculante. Dans une version dans laquelle la benne basculante est contrôlée électriquement, ce sont des câbles électriques entre les deux modules qui assurent le contrôle de la benne depuis le module tracteur, au lieu des flexibles hydrauliques.

Selon un mode de réalisation, le treuil de la première dameuse n'est pas utilisé et la pompe du moteur de treuil est récupérée pour servir comme pompe de marche pour le moteur de marche par, une liaison par flexible hydraulique entre le module tracteur et le module remorque. Le servomoteur de la pompe de treuil est alors remplacé par un servomoteur de marche.

Selon ce mode de réalisation, le système de contrôle inclut l'interface de contrôle, le servomoteur pour le moteur de marche du module tracteur et le servomoteur de marche pour le module remorque. Selon un mode de réalisation, le système de contrôle comprend aussi un potentiomètre, accessible par l'opérateur, dans la cabine du module tracteur, qui permet à l'opérateur de doser la puissance envoyée aux moteurs de marche du module tracteur par rapport à la puissance envoyée au moteur de marche du module remorque.

Selon un autre mode de réalisation, le véhicule articulé comprend un système de freinage hydrostatique, le freinage des chenilles étant contrôlable depuis la cabine du module tracteur, le freinage de chaque chenille étant indépendant.

La direction du module remorque peut être facilité par une transmission différentielle entre ses deux chenilles. Selon un mode de réalisation un pont arrière avec une transmission différentielle est fourni pour permettre à l'unique moteur de marche du module remorque d'entraîner les deux barbotins à des vitesse différentes selon la direction de mouvement des chenilles. Selon un mode de réalisation de l'invention, la transmission différentielle est une transmission différentielle mécanique.

Selon un mode de réalisation, le module remorque comporte un système hydraulique de réglage de tension des chenilles.

## Revendications

1. Véhicule articulé (100, 200) comportant :
un module tracteur à chenilles (110, 210) ;
un module remorque à chenilles (120, 220) ; et
un système d'attelage (151, 152) permettant le module remorque (120, 220) à être attelé au module tracteur (110, 210) ;
le véhicule articulé (100, 200) comportant en outre :
un premier moteur (290) pour mettre en mouvement une première chenille (115) du module tracteur (110, 210) ;
un deuxième moteur (292, 392) pour mettre en mouvement une deuxième chenille (116) du module tracteur (110,210) ;
un troisième moteur (294, 394) pour mettre en mouvement au moins une chenille (125, 126) du module remorque (120, 220) ; et
un système de contrôle (230, 241, 242, 300) ayant une interface de contrôle (242, 342) permettant à un conducteur du véhicule articulé (100, 200) de gérer une vitesse et une direction de marche du véhicule articulé (100, 200) en contrôlant au moins une vitesse d'entraînement de la première chenille (115) du module tracteur (110, 210) par rapport à une vitesse d'entraînement de la deuxième chenille (116) du module tracteur (110, 210) ainsi que par rapport à une vitesse d'entraînement de la chenille (125, 126) du module remorque (120, 220) ;
**caractérisé en ce que** :
le module remorque (120, 220) comporte un pont de transmission (296) agencé pour permettre au troisième moteur (294, 394) de mettre en mouvement les deux chenilles (125, 126) du module remorque (120, 220) à des vitesse différentes en adéquation avec la vitesse et la direction de marche.

2. Véhicule (100, 200) selon la revendication 1, dans lequel le système d'attelage (151, 152) est configuré pour permettre au module remorque (120, 220) de pivoter autour d'un point pivot sur le module tracteur (110, 210) : dans un premier axe vertical sensiblement perpendiculaire à la direction de marche ; dans un deuxième axe horizontal sensiblement perpendiculaire à la direction de marche ; et dans un troisième axe longitudinal sensiblement parallèle à la direction de marche.

3. Véhicule (100, 200) selon la revendication 2, dans lequel le système d'attelage (151, 152) comporte: une sellette d'attelage (151) double oscillante, montée pivotante autour de l'axe longitudinal, vers l'arrière du module tracteur (110, 210) ; et un pivot d'attelage (152) monté vers l'avant du module remorque (120, 220) et configuré pour coopérer avec la sellette d'attelage (151) pour permettre des oscillations autour d'un premier axe vertical sensiblement perpendiculaire à la direction de marche; autour d'un deuxième axe horizontal sensiblement perpendiculaire à la direction de marche et autour d'un troisième axe longitudinal sensiblement parallèle à la direction de marche.

4. Véhicule (100, 200) selon l'une quelconque des revendications précédentes, dans lequel le premier moteur (290) et le deuxième moteur (292, 392) sont montés sur le module tracteur (110, 210), le troisième moteur (294, 394) étant monté sur le module remorque (120, 220) et configuré pour entraîner un arbre de transmission (295) qui est lié aux deux chenilles (125, 126, 127, 128, 227, 228) du module remorque (120, 220) par le pont de transmission (296), le pont de transmission (296) comportant un différentiel pour permettre aux deux chenilles (125, 126, 127, 128, 227, 228) du module remorque (120) d'être entraînées à des vitesses indépendantes l'une de l'autre.

5. Véhicule (100, 200) selon l'une quelconque des revendications précédentes, dans lequel l'interface de contrôle (242) est dans un poste de contrôle (140) monté sur le module tracteur (110, 210).

6. Véhicule (100, 200) selon l'une quelconque des revendications précédentes, le véhicule (100, 200) comportant un système de transmission électrique dans lequel système les moteurs (290, 292, 294, 392, 394) sont des moteurs électriques.

7. Véhicule (100, 200) selon l'une quelconque des revendications 1 à 5, le véhicule (100, 200) comportant un système de transmission hydrostatique, les moteurs (290, 292, 294, 392, 394) étant des moteurs hydrauliques, dans lequel système est compris un moteur principal de puissance configuré pour entraîner : une première pompe hydraulique pour alimenter le premier moteur hydraulique (290) ; une deuxième pompe hydraulique pour alimenter le deuxième moteur hydraulique (292) ; et une troisième pompe hydraulique pour alimenter le troisième moteur hydraulique (294) ; le système de contrôle comportant : un premier servomoteur pour contrôler la première pompe hydraulique ; un deuxième servomoteur pour contrôler la deuxième pompe hydraulique ; et un troisième servomoteur pour contrôler la troisième pompe hydraulique ; le moteur principal de puissance étant un moteur thermique ou un moteur électrique.

8. Véhicule (100, 200) selon l'une quelconque des revendications précédentes, dans lequel le système de contrôle (230, 241, 242, 300) comporte un régulateur (242, 342), accessible par le conducteur, agencé pour permettre au conducteur de gérer manuellement un rapport entre un couple appliqué par le premier moteur (290, 292, 392) ou par le deuxième moteur par rapport à un couple appliqué par le troisième moteur (294, 394) ou pour freiner une ou plusieurs des chenilles.

9. Véhicule (100, 200) selon l'une quelconque des revendications précédentes, dans lequel le système de contrôle (230, 241, 242, 300) est configuré, de surcroit, pour prendre en compte un ou plusieurs des paramètres suivants en gérant la vitesse des chenilles (115, 116, 125, 126, 117, 118, 127, 128, 217, 218, 227, 228) : une attitude du véhicule, mesurée par un accéléromètre du véhicule ; une commande donnée par le conducteur pour freiner le véhicule ; un angle formé entre le module tracteur et le module remorque dans l'axe horizontal, l'axe vertical ou l'axe longitudinal.

10. Véhicule (100, 200) selon l'une quelconque des revendications précédentes, dans lequel le système de contrôle (230, 241, 242, 300) est monté sur le module tracteur (120, 220).

11. Véhicule (100, 200) selon l'une quelconque des revendications précédentes, dans lequel le module remorque (120, 220) a une configuration de semi-remorque dans le sens que les chenilles (125, 126) du module remorque sont situées vers l'arrière du module remorque (120, 220), le module remorque (120, 220) étant configuré pour reposer sur et s'articuler autour du point pivot vers l'arrière du module tracteur (110, 210), avec entre 25% et 50% du poids du module remorque (120, 220) et de sa charge se trouvant sur l'arrière du module tracteur (110, 210).

12. Véhicule (100, 200) selon l'une quelconque des revendications précédentes, dans lequel le module remorque (120, 220) comporte une benne (199, 299), de préférence une benne basculante.

13. Véhicule tracteur (110, 210) à chenilles comportant :
un premier moteur (192, 292) pour mettre en mouvement une première chenille (116, 118, 218) du véhicule tracteur ;
un deuxième moteur (290) pour mettre en mouvement une deuxième chenille (115, 125, 117, 127, 217) du véhicule tracteur (110, 210) ;
un système de contrôle (230, 241, 242, 300) ayant une interface de contrôle (242, 342) permettant à un conducteur du véhicule tracteur (110, 210) de gérer une vitesse et une direction de marche du véhicule (100, 200) en contrôlant au moins une vitesse d'entraînement de la première chenille du véhicule tracteur par rapport à une vitesse d'entraînement de la deuxième chenille du véhicule tracteur ; et
un système d'attelage permettant d'atteler un véhicule remorque ;
**caractérisé en ce que** :
le système de contrôle est configuré en outre pour fournir un signal pour contrôler une vitesse d'entraînement des chenilles du véhicule remorque par rapport à la vitesse d'entraînement d'au moins la première chenille du véhicule tracteur.

14. Véhicule remorque à chenilles (120, 220) comportant :
une paire de chenilles ;
**caractérisé en ce que** le véhicule remorque comporte :
un moteur adapté pour être commandé par un signal externe du véhicule remorque, ledit moteur étant configuré pour entraîner en rotation un arbre de transmission ; et
un pont de transmission comportant un différentiel, le pont de transmission placé entre l'arbre de transmission et d'un côté un premier barbotin agencé pour entraîner une première chenille de la paire de chenilles et de l'autre côté un deuxième barbotin agencé pour entraîner une deuxième chenille de la paire de chenilles indépendamment de la première chenille de la paire de chenilles ;
le véhicule remorque étant adapté pour être attelé à un autre engin par un système d'attelage qui permet au module remorque de pivoter autour d'un point pivot sur l'autre engin : dans un premier axe vertical sensiblement perpendiculaire à une direction de marche du véhicule remorque ; dans un deuxième axe horizontal sensiblement perpendiculaire à la direction de marche ; et dans un troisième axe longitudinal sensiblement parallèle à la direction de marche.
